# EUROPEAN PATENT APPLICATION

(11) **EP 2 200 028 A1**
(43) Date of publication of application: **23.06.2010**
(21) Application number: 08305903.0
(22) Date of filing: 09.12.2008
(51) Int. Cl.: G11B 7/08

(54) **Apparatus for writing data to a holographic storage medium**

(71) Applicant: Thomson Licensing, 92443 Issy-les-Moulineaux Cedex (FR)
(72) Inventor: Knittel, Joachim, 78532, Tuttlingen (DE)
(74) Representative: Schmidt-Uhlig, Thomas

(57) **Abstract**

Apparatus (2) for writing to holographic storage medium (18) comprising an optical system for imaging an object beam (5a) and a reference beam (5b) into the holographic storage medium (18), wherein a filter (12) is placed in the optical path of the object beam (5a) and or the reference beam (5b) said filter (12) having a light transmission factor that monotonously increases over at least a part of the beam cross section of the object beam (5a) and/or the reference beam (5b).

## Description

The present invention relates to an apparatus for writing data to a holographic storage medium and a method for operating said apparatus.

In holographic data storage, digital data are stored by recording the interference pattern produced by the superposition of two coherent laser beams. Where one beam, the so-called "object beam", is modulated by a spatial light modulator and carries the information/data to be recorded, the second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam that is detected by a detector array.

One advantage of holographic data storage is an increased data capacity and higher data rates. Instead of storing single bits, as it is known from conventional media such as CD or DVD, data are stored as data pages. Typically, a data page consists of a matrix of light-dark-patterns, i.e. a two dimensional binary array or an array of grey values, which code multiple bits. This allows achieving increased data rates in addition to the increased data storage density. The data page is imprinted onto the object beam by use of a spatial light modulator (SLM) and detected with a detector array.

The aforementioned conventional optical storage media only use a single or few 2-dimensional layers for data storage. In holographic data storage media, the entire volume is used for storing information. Further, the volume of the data storage material used for data storage is not completely exhausted when data is written to it. The advantage of holographic data storage is the possibility to store multiple data in the same volume. This is achieved e.g. by changing the angle between the object beam and the reference beam, called angle multiplexing. A further option, called shift multiplexing, applies a slight shift between subsequent holograms, which do overlap each other for the most part. Shift multiplexing is performed e.g. by movement of the storage material.

However, inhomogeneous grating strength of the multiplexed holograms has been observed. The inhomogeneities in the hologram lead to a distorted reconstructed object beam, which in turn leads to data readout errors.

Accordingly, it is an object of the present invention to provide an apparatus for writing to a holographic storage medium and a method for operating said apparatus that are improved with respect to data readout error rates.

The problem is solved by the subject matter of the independent claims. Advantageous embodiments of the invention are subject matter of the dependent claims.

The apparatus for writing to a holographic storage medium according to the invention comprises an optical system for imaging an object beam and a reference beam into the holographic storage medium. A filter is placed in the optical path of the object beam and/or the reference beam, said filter having a light transmission factor that monotonously increases over at least a part of the beam cross section of the object beam and/or the reference beam.

The concept of the aforementioned apparatus is based on the following considerations:

In the following it is assumed that data is written to a holographic storage medium using shift multiplexing. When writing holograms to a holographic storage medium using shift multiplexing, a plurality of holograms are written in the same volume of the holographic storage material. Several holograms overlap with only a slight displacement between subsequent holograms. During shift multiplexing, the main part of the hologram is written in a volume that has already been used for the storage of other data holograms before, e.g. the left and main part of the hologram overlaps with holograms written before, while the right part sees fresh material of the holographic storage medium.

The sensitivity of the storage material changes due to light exposure, i.e. the sensitivity of the material in a specific volume changes with the sum of light exposure in the respective volume. Roughly estimating, the sensitivity of the material decreases with increasing sum of light exposure. It has been recognized that the varying grating strength of the holograms is due to the fact that the hologram is partly written in fresh and partly written in more or less exhausted holographic storage material.

To tackle the aforementioned problems, it is suggested to write holograms with a varying intensity over the cross section of the hologram. The intensity of the holograms shall monotonously increase in at least a part of its cross section. This is achieved by placing a filter in the optical path of the object beam and/or the reference beam of an apparatus for writing data to a holographic storage medium. Said filter has a light transmission factor monotonously increasing in at least a part of its cross section. In other words: The transmission factor of the filter will be high in that zone of the filter corresponding to sections of the hologram that are written to more or less exhausted holographic storage material. Accordingly, the transmission factor of the filter will be lower in that zone of the filter corresponding to sections of the hologram that are written to fresh holographic storage material. By help of said filter that part of the hologram, which is written to fresh storage material, has a decreased or low intensity while the other part of the hologram, which is written to at least partly exhausted storage material, has, compared to the aforementioned part, an increased or high intensity. Consequently, the resulting hologram is more homogeneous, which in turn leads to a reduced data readout error rate.

According to a first embodiment of the invention the light transmission factor of the filter monotonously increases in a first zone of the filter, while the light transmission factor of the filter monotonously decreases in a second zone of said filter. It has been observed that the sensitivity of holographic storage material first increases by light exposure, before a continuous decrease with increasing light exposure starts. Homogeneous holograms can be written to such holographic storage material using the filter according to the aforementioned embodiment.

In other cases, a holographic storage material is applied that shows a continuous decrease in sensitivity with increasing light exposure. Due to this, according to a further embodiment, a filter is applied that offers a light transmission factor that monotonously increases over the entire cross section of the object beam and/or the reference beam.

According to a further embodiment the filter is located in a first plane and the holographic storage medium is located in a second plane, wherein the first plane and the second plane are optically conjugated planes. Preferably, the hologram inside the holographic storage medium is located in the aforementioned second plane. The aforementioned embodiments are advantageous in that optically conjugated planes show the same intensity distribution except for a magnification factor defined by the optical system. Because the plane of the filter and the plane of the holographic storage medium are optically conjugated, the hologram that is written inside the holographic storage medium has exactly the intensity distribution defined by the light transmission factor of the filter.

The aforementioned embodiments are advantageously further improved in that the optical system of the apparatus for writing to a holographic storage medium comprises a 4f-system for imaging the object beam and/or the reference beam into the holographic storage medium. A 4f-system allows a precise up- and downscaling of an image, in this case the hologram. Because the filter is located in a first plane and the holographic storage medium and the hologram are located in a second plane, respectively, wherein the first and the second plane are optically conjugated planes defined by the 4f-system, the hologram is precisely written with the intensity distribution defined by the light transmission factor of the filter.

According to a further embodiment the light transmission factor of the filter is changeable. Preferably, the filter comprises a LCD-array as a device for varying the light transmission factor. Advantageously, the light transmission factor of the filter may be adopted e.g. to the degree of overlap of holograms during shift multiplexing. By adopting the light transmission factor of the filter to the recording conditions, optimal recording results, i.e. holograms with an optimized grating strength are recorded.

In a further embodiment, the light transmission factor of the filter varies linearly over the beam cross section. The motivation to do so is as follows: In a first approach it is assumed that the sensitivity of the holographic storage medium linearly decreases with increasing light exposure. Therefore, during shift multiplexing the sensitivity of the holographic storage material approximately linearly decreases with increasing number of holograms that are written to the same volume. If the displacement between neighboring holograms is constant, the sensitivity of the holographic storage material also decreases linearly. Consequently, in order to compensate the linear decrease of sensitivity, the light transmission factor of the filter preferably varies linearly.

The object of the invention is further solved by a method for operating an apparatus for writing to and/or reading from a holographic storage medium according to one of the preceding claims, wherein according to this method during writing the filter is disposed in the optical path of the object beam and/or the reference beam while during reading the filter is removed from the respective optical path.

According to this method, the hologram is written to the holographic storage medium using a filter with a light transmission factor monotonously increasing over its cross section. As a result holograms with a homogeneous grating strength are written to the holographic storage medium. During the readout process, the filter is removed from the optical path; consequently, the reconstructed object beam is not disturbed by said filter. According to the aforementioned method, the writing process is improved, while the readout process is not deteriorated by this improvement.

According to a further embodiment, the holograms are written to the holographic storage medium using shift multiplexing and the light transmission factor changes as a function of overlap of the holograms due to said multiplexing. The grating strength of the written holograms is optimized when using the method according to this embodiment. The gradient of the light transmission factor of the filter is adopted to the shift multiplexing process, e.g. in case the overlap of holograms is high, i.e. the displacement between subsequent holograms is low, the light transmission factor steeply increases over the cross section of the filter, while in case the overlap of holograms is low, the light transmission factor has a flat gradient over the cross section of the filter.

In the following the invention is described in more detail with reference to the attached figures and drawings. Similar or corresponding details in the figures are marked with the same reference numerals.
- Fig. 1: shows an apparatus for writing to and/or reading from a holographic storage medium;
- Fig. 2: shows a schematic cross sectional view of a holographic storage medium with stored holograms;
- Fig. 3: show schematic graphs of the sensitivity of the holographic storage medium and the number of holograms stored in said holographic storage medium;
- Fig. 4: show schematic graphs of the sensitivity of the holographic storage medium and the number of holograms stored in said holographic storage medium; and
- Fig. 5: shows a schematic graph of the transmission factor of the filter.

In the following the invention shall be explained in more detail with reference to the figures. It is understood that the invention is not limited to the exemplary embodiments, specific features can expediently by combined and/or modified without departing from the scope of the invention.

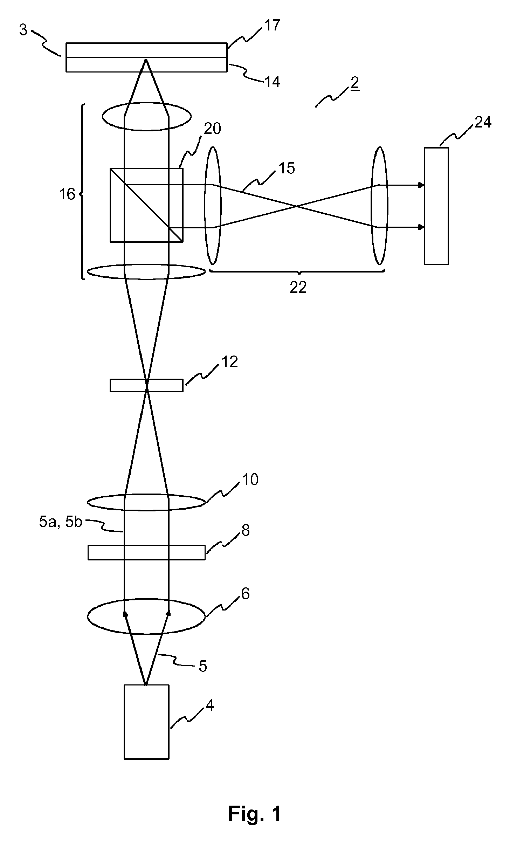

In holographic data storage digital data are stored by recording the interference pattern generated by two coherent laser beams, the object beam and the reference beam. Fig. 1 shows an exemplary setup of an apparatus 2 for writing and/or reading data to and from a holographic storage medium 3. The optical setup is used for collinear holography that differs from conventional off-axis holography by the feature that the object beam and the reference beam are coaxially aligned and are focused by the same objective lens to holographic storage material to interfere with each other in order to generate the hologram.

The holographic setup according to Fig. 1 comprises a laser 4, e.g. a laser diode, emitting a coherent light beam 5 that is collimated by a collimator lens 6. The collimated light beam 5 travels through a light-transmissive spatial light modulator (SLM) 8. The spatial light modulator 8 divides the light beam 5 into an object beam 5a and a reference beam 5b, wherein the intensity of the object beam 5a is modulated with a 2d-data pattern to be recorded. The invention is not limited to the use of a transmissive spatial light modulator 8. A reflective spatial light modulator may also be used with an optical system that is adopted accordingly. Likewise, instead of a amplitude spatial light modulator a phase spatial light modulator may be used.

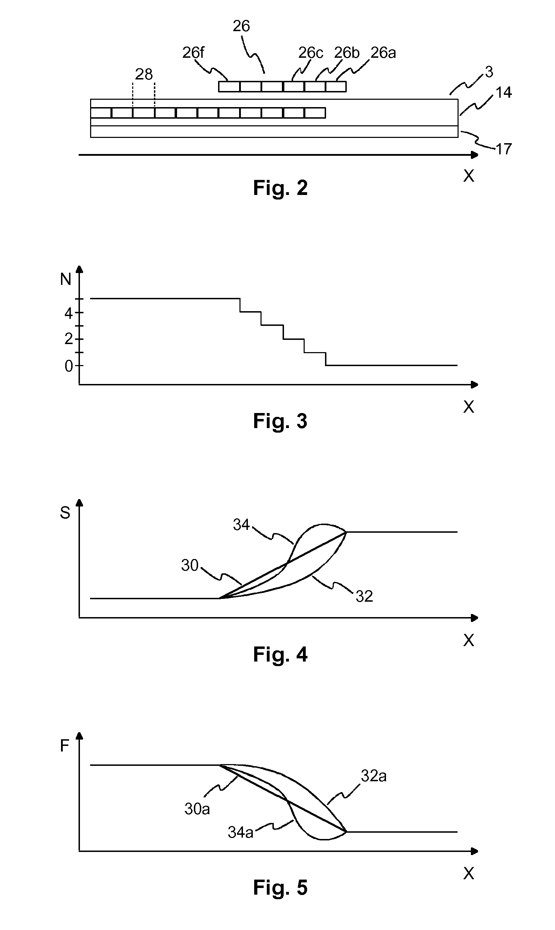

Behind the spatial light modulator 8, the object beam 5a and the reference beam 5b pass a focusing lens 10. A filter 12 is positioned in its Fourier plane, which will be explained in more detail with regard to Figs. 2 to 5. The plane of the filter 12, i.e. the Fourier plane, is imaged inside the holographic storage material 14 of the holographic storage medium 3 by help of a 4f-system 16. The holographic storage medium 3 comprises a substrate 17 with a reflective coating, e.g. a disc, and a thin layer, i.e. 300µm, of the holographic storage material 14 on top. In the focus of the 4f-system that is located inside the holographic storage material 14, the reference beam 5b and the object beam 5a interfere to generate a hologram.

For readout of the stored data, the hologram is illuminated by the reference beam 5b only. The reference beam 5b is diffracted by the hologram and due to this a reconstruction of the original object beam 5a is obtained. During the readout process, the filter 12 is removed from the optical path. Therefore, the readout process is not disturbed by the filter 12. The reconstructed object beam 15 leaving the holographic storage material 14 is reflected by the reflective coating towards the beam splitter 20, which directs the reconstructed object beam 15 towards a second 4f-system 22. The second 4f-system 22 focuses the reconstructed object beam 15 on an array detector 24, e.g. a CCD array or a high-speed CMOS sensor.

During the recording process shift-multiplexing is applied, i.e. the holograms that are written to the holographic storage material 14 overlap each other. Between the subsequent steps of writing separate holograms the holographic storage medium 3, e.g. the disc, is slightly moved in a writing direction lateral to the direction of the object beam 5a and the reference beam 5b. The displacement of the holographic storage medium 3 is only part of the lateral dimension of the holograms, i.e. the diameter of the respective holograms.

Fig. 2 shows a schematic cross sectional view of the holographic storage medium 3. A plurality of holograms are stored inside the holographic storage medium 14, with an offset 28 to each other in the writing direction X. Note that the writing directions X of Figs. 2 to 5 do all correspond. The hologram 26 that is next to being recorded is shown with an offset perpendicular to the plane of the holographic storage medium 3. According to the embodiment shown in Fig. 2 the hologram 26 sees fresh material in its outermost right section 26a. In the neighboring section 26b, the hologram 26 will overlap with the previous hologram. In section 26c, the hologram 26 will overlap with the previous and the penultimate hologram.

Fig. 3 illustrates this situation. The graph shows the number N of overlapping holograms relative to the writing direction X, which corresponds to the scaling of the writing direction X in Fig. 2. In the right part of hologram 26, section 26a does not overlap with previous holograms, while in the left part of hologram 26, in section 26f the number of overlapping holograms is five.

Fig. 4 shows the sensitivity S of the holographic storage material 14 as a function of the writing direction X. Three curves are shown in Fig. 4. For the first curve 30 it is assumed that the sensitivity S decreases linearly with the number N of overlapping holograms. For the second curve 32, it is assumed that the sensitivity S decreases exponentially. The third curve 34 will be discussed later.

The model explained in connection with Figs. 2 to 4 is only a rough estimation of what is happening under real conditions. In practice, each hologram 26 shows a Gaussian intensity distribution over its diameter. Therefore, the sum of light exposure of the holographic storage material 14 is a superposition of Gaussian curves with a slight displacement between each other. However, the decrease of the sensitivity S of the holographic storage material 14 can be roughly estimated in turn as a linear decrease.

The decreasing sensitivity S that is dependent on the position of the hologram 26 leads to a varying grating strength over the cross section of the hologram 26. In order to provide recording of holograms 26 having a homogeneous grating strength the filter 12 (see Fig. 1) has a light transmission factor monotonously increasing over its cross section. The gradient of the light transmission factor F over the cross section of the filter 12 is shown in Fig. 5. The scaling of the abscissa in Fig. 5 for the gradient of the filter 12 corresponds to the dimensions of the gradient of the filter 12 imaged by the 4f-system 16 at the position of the holographic storage material 14.

The gradient of the light transmission factor F (see Fig. 5) of the filter 12 is exactly the other way round, compared to the gradient of the sensitivity S in Fig. 4. I.e. the light transmission factor F curves 30a and 32a in Fig. 5 correspond to sensitivity S curves 30 and 32 in Fig. 4. The third curve 34a will be discussed later.

Due to this gradient of the light transmission factor F, during recording of the hologram 26 that section of the hologram 26, e.g. section 26f that is stored in more or less exhausted holographic storage material 14 has a high intensity, because the light transmission factor F of the filter 12 is high in its corresponding zone. On the other hand that part of the hologram 26 that is recorded to fresh holographic storage material 14, i.e. section 26a, has a low intensity, in order to prevent exhaustion of the holographic storage material 14. Consequently, the respective part of the filter 12 determining the intensity of the hologram 26 in section 26a has a low light transmission factor F.

Consequently, the hologram 26 is recorded with an intensity distribution that is monotonously varying over its cross section. As a result over-exhaustion of the holographic storage material 14 is prevented and the homogeneity of the holograms is increased. This in turn leads to a reduced readout error rate.

Furthermore, depending on the material that is used as holographic storage material, it is also possible that its sensitivity S (see Fig. 4) first increases in a region with some overlapping holograms 26. There may be a certain threshold of a distinct number of holograms 26 overlapping before the sensitivity S starts decreasing. In this case, plotted as curve 34 in Fig. 4, the sensitivity S shows a peak. Correspondingly, the light transmission factor F of the filter 12 (see Fig. 5, curve 34a) has a minimum in the corresponding region.

### Reference Signs

2 Apparatus
3 Holographic Storage Medium
4 Laser
5 Light beam
5a Object beam
5b Reference beam
6 Collimator Lens
8 Spatial Light Modulator
10 Lens
12 Filter
14 Holographic Storage Material
15 Reconstructed object beam
16 4f-System
17 Substrate
20 Beam-Splitter
22 Second 4f-System
24 Array detector
26 Hologram
26a-f Sections
28 Displacement
30,32,34 Sensitivity Curves
30a,32a,34a Light transmission Factor Curves

X Writing Direction
N Number of Holograms
S Sensitivity
F Light Transmission Factor

## Claims

**1.** Apparatus (2) for writing to a holographic storage medium (18), comprising an optical system for imaging an object beam (5a) and a reference beam (5b) into the holographic storage medium (18), wherein a filter (12) is placed in the optical path of the object beam (5a) and/or the reference beam (5b), said filter (12) having a light transmission factor that monotonously increases over at least a part of the beam cross section of the object beam (5a) and/or the reference beam (5b).

**2.** Apparatus (2) according to claim 1, wherein the light transmission factor of the filter (12) monotonously increases in a first zone of the filter and monotonously decreases in a second zone of the filter.

**3.** Apparatus (2) according to claim 1, wherein the light transmission factor of the filter (12) monotonously increases over the entire beam cross section of the object beam (5a) and/or the reference beam (5b).

**2.** Apparatus (2) according to claim 1, wherein the filter is located in a first plane and the holographic storage medium (18) is located in a second plane and wherein the first and second plane are optically conjugated planes.

**3.** Apparatus (2) according to claim 2, wherein the holograms (26) inside the holographic storage medium (18) are located in the second plane.

**4.** Apparatus (2) according to one of the preceding claims, wherein the optical system comprises a 4f-system (16) for imaging the object beam (5a) and/or the reference beam (5b) into the holographic storage medium (18).

**5.** Apparatus (2) according to claim 4, wherein the filter (12) is located in a first plane and the holographic storage medium (18) is located in a second plane and wherein the first and second plane are optically conjugated planes defined by the 4f-system (16).

**6.** Apparatus (2) according to one of the preceding claims, wherein the light transmission factor of the filter (12) is changeable.

**7.** Apparatus (2) according to claim 6, wherein the filter (12) comprises a LCD-array.

**8.** Apparatus (2) according to one of the preceding claims, wherein the light transmission factor of the filter (12) varies linearly over the beam cross section.

**9.** Apparatus (2) according to one of the preceding claims, wherein the filter (12) is an absorptive filter, a reflective filter or a diffractive filter.

**10.** Method for operating an apparatus (2) for writing to and/or reading from a holographic storage medium (18) according to one of the preceding claims, wherein during writing the filter (12) is disposed in the optical path of an object beam (5a) and/or a reference beam (5b) while during reading the filter (12) is removed from the respective optical path.

**11.** Method according to claim 10 for operating an apparatus (2) according to claim 6, wherein holograms (26) are written to the holographic storage medium (18) using shift multiplexing and the light transmission factor of the filter (12) changes as a function of overlap of holograms (26) due to said shift multiplexing.

**12.** Method for writing to a holographic storage medium (18), wherein during writing a filter (12) is disposed in the optical path of an object beam (5a) and/or a reference beam (5b), said filter (12) having a light transmission factor that monotonously increases over at least a part of the beam cross section of the object beam (5a) and/or the reference beam (5b).
